# EUROPÄISCHE PATENTANMELDUNG

(11) **EP 4 768 405 A1**
(43) Veröffentlichungstag der Anmeldung: **01.07.2026**
(21) Anmeldenummer: 24223708.9
(22) Anmeldetag: 30.12.2024
(51) Int. Cl.: B65G 1/137, G06Q 10/083

(54) **SYSTEM ZUR INTRALOGISTISCHEN VERTEILUNG VON GÜTERN UND VERFAHREN ZUM TRANSPORTIEREN VON GÜTER IN EINEM SYSTEM ZUR INTRALOGISTISCHEN VERTEILUNG VON GÜTERN**

(71) Anmelder: Lanz, Martin, 3097 Liebefeld (CH)
(72) Erfinder: Lanz, Martin, 3097 Liebefeld (CH)
(74) Vertreter: Neuhold, Alfred

(57) **Zusammenfassung**

Die Erfindung betrifft ein System 20 zur intralogistischen Verteilung von Gütern 24, insbesondere in einer abgeschlossenen Räumlichkeit, umfassend zumindest eine Beladestation 30, zumindest einen Transportbehälter 25 zum Aufnehmen zumindest eines Guts 24, wobei der zumindest eine Transportbehälter 25 in der zumindest einen Beladestation 30 mit zumindest einem Gut 24 befüllbar ist, zumindest eine Transportbehälteraufnahmeeinrichtung 32, wobei die zumindest eine Transportbehälteraufnahmeeinrichtung 32 ausgebildet ist, den zumindest einen Transportbehälter 25 hängend aufzunehmen, zumindest ein flugfähiges Transportmittel 41, 42, mit zumindest einer Aufnahmeeinrichtung 45, und zumindest eine Steuerungseinrichtung 51, welche ausgebildet ist, das Flugverhalten des zumindest einen flugfähigen Transportmittels 41, 42 zu steuern. Die Aufnahmeeinrichtung 45 des zumindest einen flugfähigen Transportmittels 41, 42 ist ausgebildet, den zumindest einen hängenden Transportbehälter 25 von der zumindest einen Transportbehälteraufnahmeeinrichtung 32 aufzunehmen.

## Beschreibung

Die vorliegende Erfindung betrifft ein System zur intralogistischen Verteilung von Gütern gemäss dem Oberbegriff des Patentanspruchs 1, und ein Verfahren zum Transportieren von Güter in einem System zur intralogistischen Verteilung von Gütern gemäss dem Patentanspruch 12.

### Technologischer Hintergrund

Unter einem intralogistischen System versteht man ein System, bei dem logistische Warenbewegungen innerhalb einer Unterbauung abgewickelt werden. Bekannte intralogistische Systeme umfassen Lagerregale, Fördereinrichtungen, Sortiereinrichtungen, Kommissionierungseinrichtungen und Verpackungseinrichtungen. Diese Einrichtungen sind zum Grossteil ortsfest in der Unterbauung angeordnet. Darüber hinaus werden bewegbare Fördereinrichtungen, wie autonom gesteuerte Fahrzeuge oder Drohnen eingesetzt, um zumindest teile der intralogistischen Warenabwicklung zu übernehmen.

Die WO 2017/152201 A1 offenbart ein System zum Kommissionieren von Produkten in einen einem Kommissionierungsauftrag zugeordneten Auftragsbehälter mit einem in einem Gebäude vorgesehenen Lagerregal zum Lagern der Produkte und mit Produktfördermitteln zum Auslagern der Produkte an eine im oder am Lagerregal vorgesehene Übergabestelle. Das System weist einen Steuerungsrechner zum Ansteuern zumindest eines flugfähigen Objekts, insbesondere einer Drohne, auf, wobei das flugfähige Objekt zum Kommissionieren des ausgelagerten Produkts in den Auftragsbehälter ausgebildet ist. Die Übergabestelle weist Übergabemittel zum Übergeben des ausgelagerten Produkts auf, um ein Aufnehmen des ausgelagerten Produkts mit Lastaufnahmemitteln des flugfähigen Objekts zu ermöglichen.

Die DE 102021109957 A1 offenbart ein intralogistisches System mit mindestens einer Flugdrohne zum Transport von Transportgut innerhalb des intralogistischen Systems.

Es wird vorgeschlagen, dass das intralogistische System über ein Fördersystem mit mindestens einer Dockeinrichtung zum Andocken und Abdocken der Flugdrohne verfügt, wobei das Fördersystem dazu ausgebildet ist, die Flugdrohne nach dem Andocken bis zum Abdocken über eine Förderstrecke mitzutransportieren.

Nachteilig an dem Stand der Technik ist, dass die bekannten intralogistischen Systeme mit Drohnen als flugfähige Transportmittel grosse Flächen mit einer hohen Verbauungshöhe benötigen, um verhältnismässig wenige Güter zu kommissionieren bzw. in einer Unterbauung zu transportieren. Das Volumen an bewegten Gütern ist relativ klein, sodass die bekannten Systeme sehr unwirtschaftlich sind.

### Darstellung der Erfindung

Eine Aufgabe der Erfindung besteht darin, mindestens einen Nachteil des Standes der Technik zu vermeiden. Es soll ein verbessertes System zur intralogistischen Verteilung von Gütern geschaffen werden, mit der insbesondere eine verbesserte räumliche Ausnutzung einer Überbauung des Systems erzielbar ist, sodass eine verbesserte intralogistische Abwicklung von Gütern platzsparend ermöglicht wird. Es soll ein verbessertes Verfahren zur intralogistischen Verteilung von Gütern geschaffen werden, mit dem eine verbesserte räumliche Ausnutzung einer Überbauung des Systems erzielbar ist, sodass eine verbesserte intralogistische Abwicklung von Gütern platzsparend ermöglicht wird.

Diese Aufgabe wird durch die Merkmale der unabhängigen Patentansprüche gelöst. Vorteilhafte Weiterbildungen sind in den Figuren und in den abhängigen Patentansprüchen dargelegt.

Ein erfindungsgemässes System zur intralogistischen Verteilung von Gütern umfasst zumindest eine Beladestation, zumindest einen Transportbehälter zum Aufnehmen zumindest eines Guts, wobei der zumindest eine Transportbehälter in der zumindest einen Beladestation mit zumindest einem Gut befüllbar ist, zumindest eine Transportbehälteraufnahmeeinrichtung, wobei die zumindest eine Transportbehälteraufnahmeeinrichtung ausgebildet ist, den zumindest einen Transportbehälter hängend aufzunehmen, zumindest ein flugfähiges Transportmittel, mit zumindest einer Aufnahmeeinrichtung, und zumindest eine Steuerungseinrichtung, welche ausgebildet ist, das Flugverhalten des zumindest einen flugfähigen Transportmittels zu steuern. Die zumindest eine Aufnahmeeinrichtung des zumindest einen flugfähigen Transportmittels ist ausgebildet, den zumindest einen hängenden Transportbehälter von der zumindest einen Transportbehälteraufnahmeeinrichtung aufzunehmen.

Das Aufnehmen und Transportieren von hängenden Transportbehältern durch ein flugfähiges Transportmittel schafft neue kostengünstige Möglichkeiten in der intralogistischen Verteilung von Gütern. Ein weiterer Vorteil ist die große Skalierbarkeit und hohe Modularität des erfindungsgemässen Systems. Bestehende Systeme sind häufig starr, fest verbaut und nur bedingt skalierbar. Derartige Systeme sind beispielsweise für ein Sortieren von Gütern besonders vorteilhaft. Mit dem erfindungsgemässen System ist eine verbesserte räumliche Ausnutzung einer Überbauung des Systems erzielbar und eine verbesserte intralogistische Abwicklung von Gütern platzsparend möglich. Damit ist ein komplexes und umfangreiches intralogistisches System in einer Überbauung mit einer kleineren Grundfläche möglich. Auf herkömmliche Förderbahnen mit festgelegten Förderstrecken in der Überbauung kann verzichtet werden. Dies führt zu einer grossen Anzahl von Gütern, welche gleichzeitig transportiert, sortiert bzw. kommissioniert werden können, sodass die Wirtschaftlichkeit des System massgeblich erhöht ist. Eine Überbauung kann eine Lagerhalle ein Haus oder andere Gebäude mit Räumlichkeiten umfassen und umfasst in diesem Zusammenhang jedoch auch Tunnelsysteme oder Räumlichkeiten, welche unter der Erde oder in Bergstollen vorhanden sind.

Das zumindest eine flugfähige Transportmittel kann eine flugfähige Drohne sein. Flugfähige Drohnen sind im Flug mittlerweile auf wenige Zentimeter genau steuerbar, sodass diese nun auch einsatzbereit sind, in intralogistischen System komplexe Flugmanöver zu fliegen. Das flugfähige Transportmittel umfasst zumindest eine Antriebseinrichtung und eine Kommunikationseinheit, um mit der zumindest einen Steuerungseinrichtung Daten austausche zu können.

Vorzugsweise weist der zumindest eine Transportbehälter eine Koppeleinheit auf, welche mit der Aufnahmeeinrichtung des zumindest einen flugfähigen Transportmittels wechselwirkt. Die zumindest eine Aufnahmeeinrichtung kann mit einer Koppeleinheit des hängenden Transportbehälters derart verbunden werden, dass der hängende Transportbehälter von der Transportbehälteraufnahmeeinrichtung separierbar ist.

Bevorzugt umfasst die Aufnahmeeinrichtung des zumindest einen flugfähigen Transportmittels eine Aufnahmekopplung, welche zumindest eine Magneteinrichtung umfasst. Die Magneteinrichtung kann einen Permanentmagneten oder einen aktivierbaren bzw. schaltbaren Elektromagneten umfassen. Alternativ oder ergänzend kann die Aufnahmekopplung einen Haken, Bolzen oder Stift oder eine Öse umfassen. Alternativ oder ergänzend kann die Aufnahmekopplung einen Greifarm umfassen, der von einer Greifstellung in eine Freigabestellung überführbar ist. In der Greifstellung ist die Koppeleinheit des zumindest einen Transportbehälters mit dem zumindest einen Greifarm physisch fest verbunden. Die zuvor genannte Aufnahmekopplung ist ausgebildet, sich mit der Koppeleinheit zumindest zweitweise physisch zu verbinden, um den zumindest eine Transportbehälter sicher hängend zu transportieren.

Insbesondere ist der zumindest eine Transportbehälter eine Hängetasche bzw. ein Hängesack. Taschen bzw. Säcke lassen sich einfach und platzsparend hängend positionieren und mit der Transportbehälteraufnahmeeinrichtung zumindest temporär verbinden und sind besonders gut geeignet, Güter aufzunehmen. Die Güter können platzsparend in der Tasche bzw. im Sack aufbewahrt werden und mit dem flugfähigen Transportmittel transportiert werden. Alternativ weist der zumindest eine Transportbehälter formstabile Bereiche auf. Die Formstabilität kann für den Transport der Güter wichtig sein. Somit kann die Tasche bzw. der Sack formstabil oder biegeschlaff ausgebildet sein.

Ein Gut kann beispielsweise ein Element oder ein Artikel eines bestehenden oder zukünftigen Auftrags zur Warenentnahme sein oder auch ein zur Einlagerung vorgesehener Artikel in einem Warenlager sein. Ebenfalls kann ein Gut Pakete, Briefe oder Vergleichbares in einem Verteilzentrum umfassen.

Der zumindest eine Transportbehälter kann manuell von einem Benutzer oder beispielsweise einer automatisierten Einrichtung, wie einem Roboter, auf die Transportbehälteraufnahmeeinrichtung gehängt werden. Damit ist die Transportbehälteraufnahmeeinrichtung frei und flexibel mit dem zumindest einen Transportbehälter bestückbar. Insbesondere sind mehrere Transportbehälter vorhanden, welche manuell von einem Benutzer oder beispielsweise einer automatisierten Einrichtung, wie einem Roboter, auf die Transportbehälteraufnahmeeinrichtung gehängt werden. Alternativ oder ergänzend kann der zumindest eine Transportbehälter von dem zumindest einen flugfähigen Transportmittel auf die Transportbehälteraufnahmeeinrichtung gehängt werden. Dies ist besonders vorteilhaft, wenn leere Transportbehälter umsortiert werden.

Insbesondere befindet sich das System in einer abgeschlossenen Räumlichkeit. Damit ist das System und das zumindest eine flugfähige Transportmittel von der Umgebung isoliert, sodass das Flugverhalten des zumindest eine flugfähigen Transportmittels begrenzt ist und dadurch vereinfacht kontrollierbar ist. Dies führt zu einem autonomen System, das kostengünstig ist.

Vorzugsweise weist die zumindest eine Transportbehälteraufnahmeeinrichtung zumindest ein Stranggut auf, an dem der zumindest eine Transportbehälter hängend positionierbar ist. Dafür kann der zumindest eine Transportbehälter eine Hängeaufnahme, insbesondere eine hakenförmige Hängeaufnahme, aufweisen. Das zumindest eine Stranggut ist im hier vorliegenden Zusammenhang eine sich zumindest in eine Raumrichtung erstreckende Einheit, welche zumindest ausgebildet ist, den zumindest einen Transportbehälter hängend aufzunehmen. Beispielsweise ist das Stranggut ein Seil, ein Drahtseil oder Kunststoffseil, eine Strebe, eine Stange oder ein Balken oder dergleichen. Insbesondere ist der zumindest eine Transportbehälter hängend angeordnet. Beispielsweise ist das zumindest eine Stranggut an einem Rahmen oder an einer Bewandung der Überbauung angeordnet, sodass der zumindest eine Transportbehälter an dem zumindest einen Stranggut hängend angeordnet werden kann. Eine hängende Positionierung bzw. Anordnung erlaubt ein vom Untergrund kontaktloses Halten des zumindest einen Transportbehälters an der Transportbehälteraufnahmeeinrichtung bzw. dem zumindest einen Stranggut. Der zumindest eine Transportbehälter ist somit vom Untergrund beabstandet. Bevorzugt ist der zumindest eine Transportbehälter frei-hängend positionierbar. Dabei steht der zumindest eine Transportbehälter lediglich mit einem Berührungspunkt in Kontakt mit dem Stranggut bzw. der Transportbehälteraufnahmeeinrichtung. Dies vereinfacht die Aufnahme der Koppeleinheit des zumindest einen Transportbehälters mit der Aufnahmeeinrichtung des zumindest einen flugfähigen Transportmittels wesentlich. Insbesondere ist der zumindest eine Transportbehälter frei-hängend mit der Aufnahmeeinrichtung des zumindest einen flugfähigen Transportmittels verbindbar. Dies vereinfacht ein Separieren des zumindest einen Transportbehälters von der Aufnahmeeinrichtung des zumindest einen flugfähigen Transportmittels, sowie ein Aufnehmen des zumindest einen Transportbehälters mit der Aufnahmeeinrichtung des zumindest einen flugfähigen Transportmittels wesentlich.

Bevorzugterweise weist das zumindest eine Stranggut entlang seiner Längserstreckung mehrere Positionen auf, welche jeweils zumindest einen Identifikationsmarker aufweisen. Damit ist die Position des zumindest einen Transportbehälters am zumindest einem Stranggut eindeutig bestimmt. Der zumindest eine Transportbehälter ist beispielsweise mit einem der Identifikationsmarkern logisch verknüpft, sodass das zumindest eine flugfähige Transportmittel den zumindest einen Transportbehälter auffinden kann. Beispielsweise kann das zumindest eine flugfähige Transportmittel Daten zum Identifikationsmarker speichern.

Vorzugsweise weist die zumindest eine Transportbehälteraufnahmeeinrichtung zumindest eine Fördereinrichtung mit zumindest einer Fördereinheit auf, welche ausgebildet ist, den zumindest einen Transportbehälter von einer ersten Position zu zumindest einer weiteren Position entlang des zumindest einen Strangguts zu bewegen. Damit kann der zumindest eine Transportbehälter an einer Position des zumindest einen Strangguts hängend abgegeben werden und an einer weiteren Position aus der hängenden Anordnung, beispielsweise von dem zumindest einen flugfähigen Transportmittel, wieder aufgenommen werden. Damit ist der zumindest eine Transportbehälter auch ohne flugfähiges Transportmittel im System bewegbar. Beispielsweise kann die zumindest eine Fördereinheit eine Förderkette sein, welche mit einem Antrieb verbunden ist und die bewegbare Förderkette zumindest entlang zumindest einer Raumrichtung antreibt.

Bevorzugterweise weist das zumindest eine flugfähige Transportmittel eine Erkennungseinheit auf, um zumindest den zumindest einen Transportbehälter zu erkennen. Damit ist eine sichere Aufnahme des zumindest einen Transportbehälters möglich. Insbesondere wird damit sichergestellt, dass der richtige Transportbehälter von der flugfähigen Transportmittel aufgenommen wird. Die Erkennungseinheit kann zumindest einen Sensor umfassen. Die Erkennungseinheit kann in einer vorteilhaften Ausführungsform eine Kamera sein, welche den zumindest einen Transportbehälter optisch erkennt, sodass die zumindest eine Aufnahmeeinrichtung und die Koppeleinheit des zumindest einen Transportbehälters zielgenau und reproduzierbar verbindbar sind. Insbesondere ist im Bereich der Koppeleinheit eine Markierungseinheit angeordnet. Bevorzugt ist die Erkennungseinheit ausgebildet, die Markierungseinheit zu erkennen. Beispielsweise weist die Markierungseinheit einen QR-Code oder einen Barcode auf, welcher Daten umfasst, die eindeutig dem zumindest einen Transportbehälter zugeordnet sind. Die Erkennungseinheit ist ausgebildet den QR-Code oder Barcode zu lesen und die Daten zu verarbeiten, um eine Verwechslung von Transportbehältern vermeiden zu können.

Die Aufnahmeeinrichtung weist insbesondere eine Schnittstelle auf, um Daten zwischen dem zumindest einen Transportbehälter und dem zumindest einen flugfähigen Transportmittel auszutauschen. Ist der zumindest eine Transportbehälter mit dem flugfähigen Transportmittel verbunden, können Daten über die Schnittstelle vom zumindest einen Transportbehälter unmittelbar an das flugfähige Transportmittel übertragen werden. Diese Daten können direkt im flugfähigen Transportmittel überprüft werden, oder an die zumindest eine Steuereinrichtung übertragen werden, sodass die Daten dort überprüfbar sind.

Vorzugsweise weist das zumindest eine flugfähige Transportmittel eine Energieversorgung auf, um zumindest den zumindest einen Transportbehälter mit Energie zu versorgen. Die Energieversorgung ist somit nicht nur zum Energiespeisen der Antriebseinrichtung des flugfähigen Transportmittels vorhanden, sondern liefert Energie an den zumindest einen Transportbehälter. Der zumindest eine Transportbehälter weist einen Steuermechanismus auf, der mithilfe dieser Energie steuerbar ist. Beispielsweise umfasst der Steuermechanismus einen Aktuator oder einen Schalter, um einen Öffnungsmechanismus an dem zumindest einen Transportbehälter zu betätigen.

Bevorzugterweise ist zumindest eine Pufferstation vorhanden, wobei die zumindest eine Pufferstation zumindest ein Stranggut aufweist, an dem der zumindest eine Transportbehälter hängend positionierbar ist und insbesondere freihängend angeordnet ist. Die Pufferstation dient somit als Zwischenlager für den zumindest einen Transportbehälter. Der zumindest eine Transportbehälter kann am zumindest einen Stranggut zwischengeparkt werden, bis dieser wieder von einem flugfähigen Transportmittel abgeholt wird. Die Pufferstation kann beispielsweise dazu dienen, Güter bestehender oder zukünftiger Aufträge einer Warenentnahme zu konsolidieren. Gleichzeitig kann die Pufferstation dazu dienen, Pakete, Briefe oder Vergleichbares in einem Verteilzentrum zu puffern. Bei der Lagerung oder Zwischenlagerung an der Pufferstation wird die Verbindung zwischen dem zumindest einen Transportbehälter und dem zumindest einen flugfähigen Transportmittel logisch und physisch getrennt und der zumindest eine Transportbehälter wird auf dem zumindest einen Stranggut zurückgelassen. Insbesondere weist die zumindest eine Pufferstation neben einem ersten Stranggut auch ein weiteres Stranggut auf. Dabei kann das erste Stranggut und das weitere Stranggut vertikal oder horizontal derart voneinander beabstandet sein, dass sich ein erster Transportbehälter, der am ersten Stranggut hängend positioniert ist, und ein weiterer Transportbehälter, der am weiteren Stranggut hängend positioniert ist, nicht berühren.

Vorzugsweise weist das zumindest eine Stranggut der Pufferstation entlang seiner Längserstreckung mehrere Positionen auf, welche jeweils zumindest einen Identifikationsmarker aufweisen. Damit ist die Position des zumindest einen Transportbehälters am zumindest einem Stranggut eindeutig bestimmt. Der zumindest eine Transportbehälter ist beispielsweise mit einem der Identifikationsmarkern logisch verknüpft, sodass das zumindest eine flugfähige Transportmittel den zumindest einen Transportbehälter auffinden kann. Beispielsweise kann das zumindest eine flugfähige Transportmittel Daten zum Identifikationsmarker speichern.

Bevorzugterweise weist die zumindest eine Pufferstation eine Verteilungseinrichtung auf. Die Verteilungseinrichtung ist ausgebildet, den zumindest einen Transportbehälter am zumindest einen Stranggut oder am weiteren Stranggut zu verteilen. Die Verteilungseinrichtung ermöglicht somit ein Umverteilen der Transportbehälter in der Pufferstation, ohne dass ein flugfähiges Transportmittel notwendig ist. Die Verteilungseinrichtung kann eine Robotereinheit umfassen. Die Robotereinheit ist ausgebildet, zumindest den zumindest einen Transportbehälter von dem ersten Stranggut zu dem weiteren Stranggut zu überführen. Damit kann eine komplexe Umverteilung direkt in der Pufferstation erfolgen.

Vorzugsweise ist die zumindest eine Steuereinrichtung im zumindest einen flugfähigen Transportmittel angeordnet. Damit ist das flugfähige Transportmittel autonom steuerbar und kann sich in der Überbauung autonom bewegen.

Alternativ oder ergänzend ist eine Systemsteuereinrichtung vorhanden. Diese Systemsteuereinrichtung ist zum Datenaustausch mit der zumindest einen Steuereinrichtung verbindbar, und weist eine Kommunikationsschnittstelle auf. Beispielsweise sind Auftragsdaten für einen bestimmten Transportbehälter von der Systemsteuereinrichtung auf die zumindest eine Steuereinrichtung im zumindest einen flugfähigen Transportmittel übermittelbar. Das zumindest eine flugfähige Transportmittel findet die Flugstrecke hin zum bestimmten Transportbehälter autonom. Insbesondere ist die Verteilungseinrichtung mit der Systemsteuereinrichtung zum Austausch von Daten verbunden. Die Systemsteuereinrichtung kann damit Auftragsdaten und weitere Daten an die Verteilungseinrichtung übermitteln.

Alternativ oder ergänzend ist die Systemsteuereinrichtung ausgebildet, Auftragsdaten für die mehreren flugfähigen Transportmittel zu koordinieren. Insbesondere können die einzelnen flugfähigen Transportmittel derart gesteuert werden, dass je nach Auftragsdaten die einzelnen Transportbehälter an vorbestimmte Positionen in der Pufferstation verteilt werden. Damit kann eine intelligente Aufteilung der Transportbehälter erfolgen, ohne dass sich beispielsweise die mehreren flugfähigen Transportmittel beim Transport bzw. in ihrem Flugverhalten gegenseitig einschränken. Gleichzeitig ist eine Redundanz und Dynamik in der Verwendbarkeit der Güter in den Transportmittel möglich.

Bevorzugterweise sind mehrere flugfähige Transportmittel vorhanden, wobei die zumindest eine Steuereinrichtung ausgebildet ist, das Flugverhalten der mehreren flugfähige Transportmittel zu steuern. Die zumindest eine Steuereinrichtung wirkt somit als Steuerzentrale und kommuniziert direkt mit den mehreren flugfähigen Transportmitteln.

Insbesondere weisen mehrere flugfähige Transportmittel zumindest eine Steuereinrichtung auf. Dabei ist es vorteilhaft, wenn die Steuereinrichtungen der mehreren flugfähigen Transportmitteln zum Austausch von Daten untereinander verbindbar sind. Damit ist eine Kommunikation, der mehreren flugfähigen Transportmittel ermöglicht.

Bevorzugterweise ist eine Flugmanagementeinrichtung vorhanden, welches mit der zumindest einen Steuereinrichtung zum Austausch von Daten verbunden ist. Eine Flugmanagementeinrichtung umfasst eine zentrale Steuereinheit und Recheneinheit samt Speichereinheit. Diese umfassen alle Daten der flugfähigen Transportmittel im System und kann diese über eine Kommunikationsschnittstelle mit den flugfähigen Transportmittel im System austauschen. Weiters kann die Flugmanagementeinrichtung Daten von der Beladestation, der Pufferstation und einer Endstation aufweisen. Alternativ oder ergänzend ist die Flugmanagementeinrichtung mit der Systemsteuereinrichtung zum Austausch von Daten verbunden.

Ein erfindungsgemässes Verfahren zum Transportieren von Güter in einem System zur intralogistischen Verteilung von Gütern umfasst zumindest ein
a. Bereitstellen von zumindest einem Transportbehälter auf zumindest einer Transportbehälteraufnahmeeinrichtung, wobei der zumindest eine Transportbehälter hängend auf der zumindest einen Transportbehälteraufnahmeeinrichtung angeordnet wird;
b. Aufnahme des zumindest einen Transportbehälters mit zumindest einem flugfähigen Transportmittel, wobei das zumindest eine flugfähige Transportmittel zumindest eine Aufnahmeeinrichtung aufweist;
c. Austausch von Daten zwischen dem zumindest einen flugfähigen Transportmittel und dem zumindest einen Transportbehälter.

Das Aufnehmen und Transportieren von hängenden Transportbehältern durch ein flugfähiges Transportmittel ermöglicht neue kostengünstige Möglichkeiten in der intralogistischen Verteilung von Gütern. Mit dem erfindungsgemässen System ist eine verbesserte räumliche Ausnutzung einer Überbauung des Systems erzielbar und eine verbesserte intralogistische Abwicklung von Gütern platzsparend möglich. Damit ist ein komplexes und umfangreiches intralogistisches System auf einer Überbauung mit einer kleineren Grundfläche möglich. Insbesondere ist das System ein hier vorliegend beschriebenes System.

Vorzugsweise wird der zumindest eine Transportbehälter mithilfe des flugfähigen Transportmittels zu einer Pufferstation transportiert und dort zwischengelagert. Die Pufferstation dient somit als Zwischenlager für den zumindest einen Transportbehälter. Bei der Lagerung oder Zwischenlagerung in der Pufferstation wird die Verbindung zwischen dem zumindest einen Transportbehälter und dem zumindest einen flugfähigen Transportmittel logisch und physisch getrennt.

Bevorzugterweise wird der zumindest eine Transportbehälter mithilfe des flugfähigen Transportmittels von einer Beladestation hin zur Pufferstation transportiert. Die Pufferstation kann beispielsweise dazu dienen, Güter bestehender oder zukünftiger Aufträge einer Warenentnahme, welche in der Beladestation in den zumindest einen Transportbehälter geladen wurde, zu konsolidieren. Gleichzeitig kann die Pufferstation dazu dienen, Pakete, Briefe oder Vergleichbares in einem Verteilzentrum zu puffern.

Vorzugsweise wird der zumindest eine Transportbehälter mithilfe des zumindest einen flugfähigen Transportmittels von der Beladestation hin zu einer Endstation transportiert. Damit ist ein direkter und schneller Transport der Güter hin zu einer Endstation gesichert.

Vorteilhaft wird der zumindest eine Transportbehälter mithilfe des zumindest einen flugfähigen Transportmittels von der Pufferstation hin zu der Endstation transportiert. Damit sind die in der Pufferstation konsolidierten Aufträge direkt und schnell zu einer Endstation transportierbar, sodass diese dort unmittelbar verpackt werden können.

Vorteilhaft wird der zumindest eine Transportbehälter mithilfe des zumindest einen flugfähigen Transportmittels in der Pufferstation von einer ersten Position in eine weitere Position überführt. Das zumindest eine flugfähige Transportmittel kann somit eingesetzt werden, um eine Umlagern bzw. Umsortierung der Güter in der Pufferstation zu ermöglichen.

Vorteilhaft wird der zumindest eine Transportbehälter entladen, sodass das zumindest eine Gut vom zumindest einen Transportbehälter physisch getrennt wird. Damit ist der zumindest eine Transportbehälter einfach entleerbar und wiederverwendbar. Dies kann automatisch an der Endstation erfolgen. Dabei kann eine Sensoreinrichtung an der Endstation den zumindest einen Transportbehälter erkennen und das Aktivieren eines Öffnungsmechanismus bewirken.

Vorteilhaft kann der zumindest eine Transportbehälter als Ganzes abgegeben werden. Dabei wird eine Verbindung zwischen dem zumindest einen flugfähigen Transportmittel und dem zumindest einen Transportbehälter gelöst.

Bevorzugt erkennt die Erkennungseinheit am zumindest einen flugfähigen Transportmittel eine Ablageeinheit, wie beispielsweise eine Güterrutsche, der Endstation und gibt den zumindest einen Transportbehälter über dieser Ablageeinheit frei, sodass der zumindest eine Transportbehälter oder die darin befindlichen Güter über die Ablageeinheit abtransportierbar sind. Insbesondere übermittelt die Erkennungseinheit Daten an die zumindest eine Steuereinrichtung, welche anschliessend einen Aktuator oder einen Schalter ansteuert, um einen Öffnungsmechanismus an dem zumindest einen Transportbehälter zu betätigen, sodass die Güter auf die Ablageeinheit übergeben werden. Damit ist eine vollautomatische Abgabe der Güter möglich.

Eine erfindungsgemässe Transporttasche weist eine Hängeaufnahme zum Aufhängen der Transporttasche auf einem Stranggut oder einer Förderkette auf und umfasst zumindest eine Koppeleinheit. Die Koppeleinheit ist ausgebildet, mit der Aufnahmeeinrichtung des zumindest einen flugfähigen Transportmittels zumindest temporär eine physische Verbindung einzugehen, sodass die Transporttasche mit dem zumindest einen flugfähigen Transportmittel transportierbar ist. Die Hängeaufnahme kann ein Haken sein, sodass die Transporttasche auf einem Stranggut, wie beispielsweise einem Seil aufhängbar ist. Weiters kann die Transporttasche die Merkmale des zumindest einen Transportbehälters umfassen, wie hier vorliegend beschrieben.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Mittels der nachfolgenden Figuren wird anhand von Ausführungsbeispielen die Erfindung näher erläutert.

Positionsangaben, wie "oben", unten", "rechts" oder "links" sind jeweils auf die entsprechenden Darstellungen bezogen und sind nicht als einschränkend zu verstehen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren, auch wenn sie dort im Zusammenhang mit anderen Merkmalen gezeigt sind und/oder vorstehend nicht genannt sind. Im Weiteren schliesst der Ausdruck "umfassen" und Ableitungen davon andere Elemente oder Schritte nicht aus. Ebenfalls schliesst der unbestimmte Artikel "ein" beziehungsweise "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Figurenbeschreibung

Die Figuren werden zusammenhängend und übergreifend beschrieben. Gleiche Bezugszeichen bedeuten gleiche Bauteile. Es zeigen
Fig. 1: eine erste Ausführungsform des erfindungsgemässen Systems zur intralogistischen Verteilung von Gütern in einer schematischen Perspektive,
Fig. 2: eine Beladestation des Systems gemäss Fig. 1 in einer schematischen Perspektive,
Fig. 3: die Beladestation des Systems gemäss Fig. 2 in einer schematischen Seitenansicht,
Fig. 4: ein flugfähiges Transportmittel des Systems gemäss Fig. 1 in einer schematischen Perspektive,
Fig. 5: das flugfähige Transportmittel gemäss Fig. 4 in einer schematischen Seitenansicht,
Fig. 6: eine Pufferstation des Systems gemäss Fig. 1 in einer schematischen Perspektive,
Fig. 7: die Pufferstation des Systems gemäss Fig. 6 in einer schematischen Aufsicht,
Fig. 8: die Pufferstation des Systems gemäss Fig. 6 in einer schematischen Seitenansicht,
Fig. 9: eine Endstation des Systems gemäss Fig. 1 in einer schematischen Perspektive, und
Fig. 10: die Endstation des Systems gemäss Fig. 9 in einer schematischen Seitenansicht.

### Ausführung der Erfindung

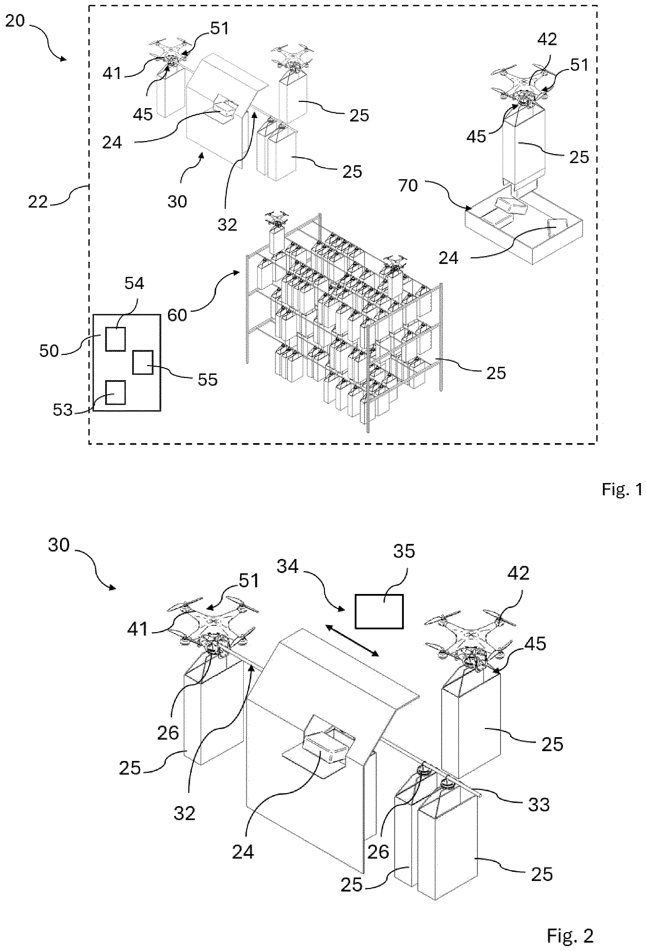

**Figur 1** zeigt ein System 20 zur intralogistischen Verteilung von Gütern mit zumindest einer Beladestation 30 und mehreren Transportbehältern 25 zum Aufnehmen zumindest eines Guts 24, wobei die Transportbehälter 25 in der zumindest einen Beladestation 30 mit zumindest einem Gut 24 befüllbar sind. Die Beladestation 30 weist eine Transportbehälteraufnahmeeinrichtung 32 auf, wobei die Transportbehälteraufnahmeeinrichtung 32 ausgebildet ist, die Transportbehälter 25 hängend aufzunehmen. Das System 20 umfasst mehrere flugfähige Transportmittel 41, 42 mit jeweils einer Aufnahmeeinrichtung 45, und eine Steuerungseinrichtung 51, welche ausgebildet ist, das Flugverhalten der flugfähigen Transportmittel 41, 42 zu steuern. Die jeweilige Aufnahmeeinrichtung 45 des flugfähigen Transportmittels 41, 42 ist ausgebildet, einen der hängenden Transportbehälter 25 von der Transportbehälteraufnahmeeinrichtung 32 aufzunehmen. Das System weist zumindest eine Pufferstation 60, ein Flugmanagementeinrichtung 50 und zumindest eine Endstation 70 auf. Das System 20 ist in einer Überbauung 22 angeordnet.

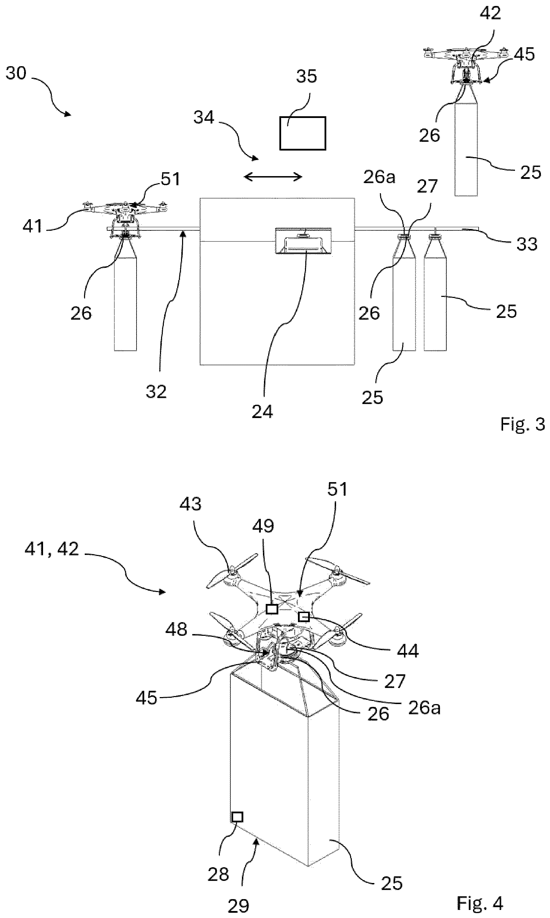

**Figur 2** und **Figur 3** zeigen eine der Beladestationen 30 des Systems 20. Die Transportbehälteraufnahmeeinrichtung 32 der Beladestation 30 ist als ein Stranggut 33 ausgebildet, an dem die mehreren Transportbehälter 25 mithilfe von hakenförmigen Hängeaufnahmen 26a hängend positioniert sind. Das gezeigte Stranggut 33 ist eine Metallstange, welche sind durch die Beladestation 30 erstreckt. Die Güter 24 werden hin zur Beladestation 30 geliefert und übergeben, sodass diese schlussendlich in den Transportbehältern 25 landen, welche eine nach der anderen hängend am Stranggut 33 angeordnet werden. Eine hängende Positionierung bzw. Anordnung erlaubt ein vom Untergrund kontaktloses Halten der Transportbehälter 25 am Stranggut 33. Präzise gesagt sind die Transportbehälter 25 frei-hängend am Stranggut 33 positioniert. Dabei stehen die Transportbehälter 25 lediglich mit einem Berührungspunkt in Kontakt mit dem Stranggut 33. Die Transportbehälter 25 können manuell von einem Benutzer oder beispielsweise einer automatisierten Einrichtung, wie einem Roboter oder von einem der mehreren flugfähigen Transportmittel 41, 42, auf die Transportbehälteraufnahmeeinrichtung 32 gehängt werden.

Die Transportbehälteraufnahmeeinrichtung 30 weist eine Fördereinrichtung 34 mit zumindest einer Fördereinheit 35 auf, welche ausgebildet ist, die Transportbehälter 25 von einer ersten Position zu zumindest einer weiteren Position entlang des zumindest einen Strangguts 33 zu bewegen. Damit können die jeweiligen Transportbehälter 25 an einer Position des Strangguts 33 hängend abgegeben werden und an einer weiteren Position aus der hängenden Anordnung, beispielsweise von dem flugfähigen Transportmittel 41, 42, wieder aufgenommen werden. Damit ist der Transportbehälter 25 auch ohne flugfähiges Transportmittel 41, 42 im System 20 bewegbar. Beispielsweise kann die zumindest eine Fördereinheit 35 eine Förderkette sein, welche mit einem Antrieb verbunden ist und die bewegbare Förderkette zumindest entlang einer Raumrichtung antreibt.

Das Stranggut 33 kann entlang seiner Längserstreckung mehrere Positionen aufweisen, welche jeweils zumindest einen Identifikationsmarker aufweisen. Damit ist die Position des zumindest einen Transportbehälters am zumindest einem Stranggut eindeutig bestimmt. Der zumindest eine Transportbehälter ist beispielsweise mit einem der Identifikationsmarkern logisch verknüpft, sodass das zumindest eine flugfähige Transportmittel den zumindest einen Transportbehälter auffinden kann. Beispielsweise kann das zumindest eine flugfähige Transportmittel Daten zum Identifikationsmarker speichern.

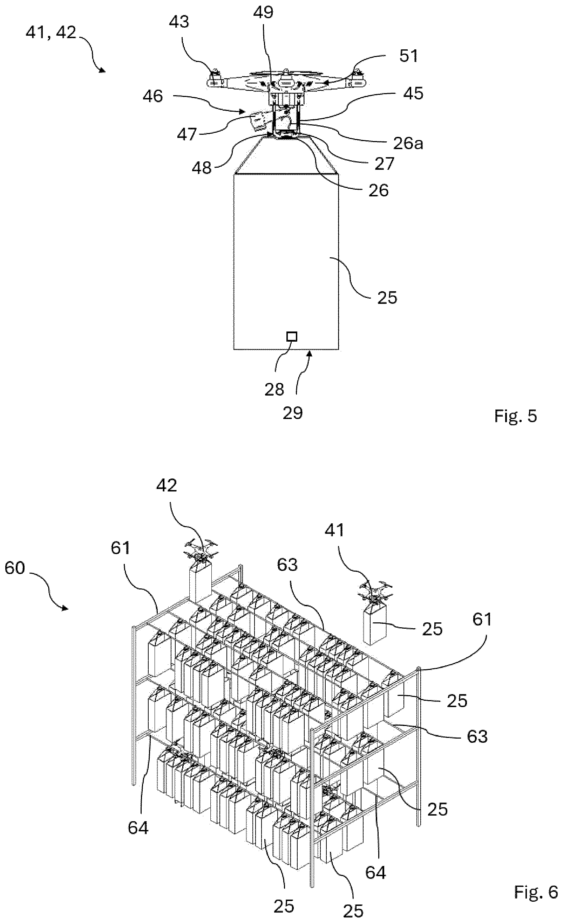

**Figur 4** und **Figur 5** zeigen die flugfähigen Transportmittel 41, 42, welche flugfähige Drohne sind. Die flugfähigen Transportmittel 41, 42 umfassen zumindest eine Antriebseinrichtung 43 und eine Kommunikationseinheit 44, um mit der zumindest einen Steuerungseinrichtung 51 Daten austausche zu können. Die zumindest eine Aufnahmeeinrichtung 45 kann mit einer Koppeleinheit 26 des hängenden Transportbehälters 25 derart verbunden werden, dass der hängende Transportbehälter 25 von der Transportbehälteraufnahmeeinrichtung 32 separierbar ist. Dabei sind die Transportbehälter 25 frei-hängend mit der Aufnahmeeinrichtung 45 des flugfähigen Transportmittels 41, 42 verbindbar.

Die flugfähigen Transportmittel 41, 42 weisen jeweils eine Erkennungseinheit 46 auf, um zumindest den Transportbehälter 25 zu erkennen. Die Erkennungseinheit 46 kann zumindest einen Sensor umfassen. Die Erkennungseinheit 46 ist in dieser Ausführungsform eine Kamera 47, welche den Transportbehälter 25 optisch erkennt, sodass die zumindest eine Aufnahmeeinrichtung 45 und die Koppeleinheit 26 des Transportbehälters 25 zielgenau und reproduzierbar verbindbar sind. Im Bereich der Koppeleinheit 26 ist eine Markierungseinheit 27 angeordnet. Die Erkennungseinheit 46 ist ausgebildet, die Markierungseinheit 27 zu erkennen. Die Erkennungseinheit 46 ist ausgebildet Markierungseinheit 27 zu lesen und die Daten zu verarbeiten.

Die Aufnahmeeinrichtung 42 weist eine Schnittstelle 48 auf, um Daten zwischen dem Transportbehälter 25 und dem flugfähigen Transportmittel 41, 42 auszutauschen. Ist der Transportbehälter 25 mit dem flugfähigen Transportmittel 41, 42 verbunden, können Daten über die Schnittstelle 48 vom Transportbehälter 25 unmittelbar an das flugfähige Transportmittel 41, 42 übertragen werden. Diese Daten können direkt im flugfähigen Transportmittel 41, 42 überprüft werden, oder an die Steuereinrichtung 51 übertragen werden, sodass die Daten dort überprüfbar sind.

Das flugfähige Transportmittel 41, 42 weist eine Energieversorgung 49 auf, um zumindest den Transportbehälter 25 mit Energie zu versorgen. Die Energieversorgung 49 ist somit nicht nur zum Energiespeisen der Antriebseinrichtung 43 des flugfähigen Transportmittel 41, 42 vorhanden, sondern liefert Energie an den Transportbehälter 25. Der Transportbehälter 25 weist einen Steuermechanismus 28 auf, der mithilfe dieser Energie steuerbar ist. Beispielsweise umfasst der Steuermechanismus 28 einen Aktuator oder einen Schalter, um einen Öffnungsmechanismus 29 an dem Transportbehälter 25 zu betätigen, sodass das geladene Gut 24, den Transportbehälter 25 verlassen kann.

Der hängende Transportbehälter 25 ist in dieser Ausführungsform eine Tasche, welche eine Koppeleinheit 26 aufweist. Taschen lassen sich einfach und platzsparend hängend positionieren und mit der Transportbehälteraufnahmeeinrichtung 32 zumindest temporär verbinden und sind besonders gut geeignet, Güter 24 aufzunehmen. Die Güter 24 können platzsparend in der Tasche aufbewahrt werden und mit dem flugfähigen Transportmittel 41, 42 transportiert werden.

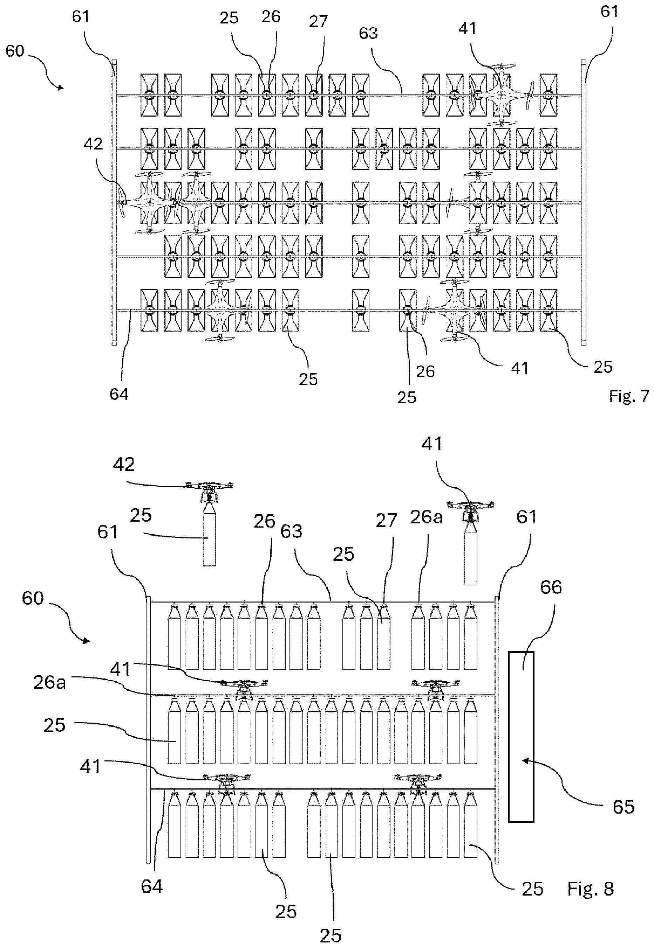

**Figur 6** bis **Figur 8** zeigen die zumindest eine Pufferstation 60, wobei die Pufferstation 60 mehrere Stranggüter 63 aufweist, an denen Transportbehälter 25 mithilfe von hakenförmigen Hängeaufnahmen 26a hängend positioniert sind und freihängend angeordnet sind. Diese Stranggüter 63 sind Seile oder Stangen, welche in einem Rahmen 61 der Pufferstation 60 gespannt sind. Die mehreren Stranggüter 63 sind horizontal und vertikal voneinander beabstandet, sodass die mehreren Transportbehälter 25 freihängend im Rahmen 61 positionierbar sind. Dabei ist das erste Stranggut 63 und das weitere Stranggut 64 vertikal und horizontal derart voneinander beabstandet, dass sich ein erster Transportbehälter 25, der am ersten Stranggut 63 hängend positioniert ist, und ein weiterer Transportbehälter 25, der am weiteren Stranggut 64 hängend positioniert ist, nicht beführen. Darüber hinaus können sich die flugfähigen Transportmittel 41, 42 auch zwischen einzelnen Transportbehälter 25 und benachbarten Stranggüter 63 frei bewegen bzw. fliegen, um einzelne Transportbehälter 25 von beispielsweise einem im Rahmen 61 angeordneten Stranggut 63 mitnehmen zu können oder dort positionieren zu können. Die Pufferstation 60 dient als Zwischenlager für die Transportbehälter 25. Die Transportbehälter 25 können an einem vordefinierten Stranggut 63 zwischengeparkt werden, bis diese wieder von einem flugfähigen Transportmittel 41, 42 abgeholt wird. Die Pufferstation 60 kann beispielsweise dazu dienen, Güter bestehender oder zukünftiger Aufträge einer Warenentnahme zu konsolidieren. Gleichzeitig kann die Pufferstation 60 dazu dienen, Pakete, Briefe oder Vergleichbares in einem Verteilzentrum zu puffern. Bei der Lagerung oder Zwischenlagerung an der Pufferstation 60 wird die Verbindung zwischen einem Transportbehälter 25 und dem flugfähigen Transportmittel 41, 42 logisch und physisch getrennt und der Transportbehälter 25 wird auf dem Stranggut 63 zurückgelassen.

Mehrere der Stranggüter 63 in der Pufferstation 60 können entlang deren Längserstreckung mehrere Positionen aufweisen, welche jeweils zumindest einen Identifikationsmarker aufweisen. Damit ist die Position des zumindest einen Transportbehälters 25 am zumindest einem Stranggut eindeutig bestimmt. Der zumindest eine Transportbehälter ist beispielsweise mit einem der Identifikationsmarkern logisch verknüpft, sodass das zumindest eine flugfähige Transportmittel 41, 42 den zumindest einen Transportbehälter 25 auffinden kann. Beispielsweise kann das zumindest eine flugfähige Transportmittel 41, 42 Daten zum Identifikationsmarker speichern.

Die Pufferstation 60 weist eine Verteilungseinrichtung 65 auf. Die Verteilungseinrichtung 65 ist ausgebildet, die Transportbehälter 25 am und zwischen den Stranggütern 63 zu verteilen. Die Verteilungseinrichtung 65 ermöglicht somit ein Umverteilen der Transportbehälter 25 in der Pufferstation 60, ohne dass ein flugfähiges Transportmittel 41, 42 notwendig ist. Die Verteilungseinrichtung 65 kann eine Robotereinheit 66 umfassen. Die Robotereinheit 66 ist ausgebildet, zumindest einen Transportbehälter 25 von dem ersten Stranggut 63 zu dem weiteren Stranggut 64 zu überführen.

Die mehreren flugfähigen Transportmittel 41, 42 weisen jeweils eine Steuereinrichtung 51 auf. Es ist eine Systemsteuereinrichtung 53 vorhanden. Diese Systemsteuereinrichtung 53 ist zum Datenaustausch mit den Steuereinrichtungen 51 verbindbar. Beispielsweise sind Auftragsdaten für einen bestimmten Transportbehälter 25 von der Systemsteuereinrichtung 53 auf die Steuereinrichtung 51 eines der flugfähigen Transportmittel 41, 42 übermittelbar. Das flugfähige Transportmittel 41, 42 findet die Flugstrecke hin zum bestimmten Transportbehälter 25 autonom. Weisters ist die Verteilungseinrichtung 65 mit der Systemsteuereinrichtung 53 zum Austausch von Daten verbunden. Die Systemsteuereinrichtung 53 kann damit Auftragsdaten und weitere Daten an die Verteilungseinrichtung 65 übermitteln.

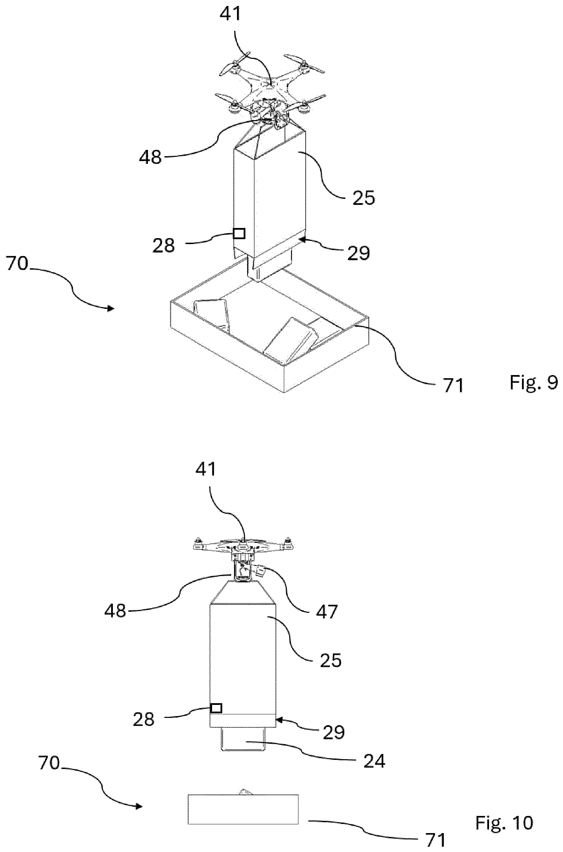

**Figur 9** und **Figur 10** zeigen eine der Endstationen 70 des Systems 20. Die Endstation 70 weist eine Ablageeinheit 71 auf. Die Transportbehälter 25 werden mithilfe der flugfähigen Transportmittel 41, 42 über der Ablageeinheit 71 positioniert, wobei die Erkennungseinheit 46 des flugfähigen Transportmittels 41, 42 die Ablageeinheit 71 erkennt und anschliessend der Transportbehälter 25 entleert wird. Die Erkennungseinheit 46 übermittelt Daten an die Steuereinrichtung 51, welche anschliessend einen Aktuator oder einen Schalter ansteuert, um einen Öffnungsmechanismus 29 an dem Transportbehälter 25 zu betätigen, sodass die Güter 24 auf die Ablageeinheit 71 übergeben werden.

Die Systemsteuereinrichtung 53 ist in einer Flugmanagementeinrichtung 50 angeordnet, welches mit den Steuereinrichtungen 51 und der Systemsteuerung 53 zum Austausch von Daten verbunden ist - siehe **Figur 1****.** Diese Flugmanagementeinrichtung 50 umfasst die zentrale Systemsteuereinrichtung 53 und eine Recheneinheit 54 samt Speichereinheit 55. Diese umfassen alle Daten der flugfähigen Transportmittel 41, 42 im System 20 und kann diese über eine Kommunikationsschnittstelle 56 mit den flugfähigen Transportmittel 41, 42 im System 20 austauschen. Weiters kann die Flugmanagementeinrichtung 50 Daten von den Beladestation 30, der Pufferstation 60 und einer Endstation 70 aufweisen.

Zur Beschreibung des Verfahrens zum Transportieren von Güter 24 in einem System 20 zur intralogistischen Verteilung von Gütern wird auf die **Figur 1** bis **Figur 10** verweisen. Das Verfahren umfasst zumindest ein
a. Bereitstellen mehrerer Transportbehälter 25 auf einer Transportbehälteraufnahmeeinrichtung 32, wobei die Transportbehälter 25 hängend auf der Transportbehälteraufnahmeeinrichtung 32 angeordnet werden;
b. Aufnahme eines Transportbehälters 25 mit einem flugfähigen Transportmittel 41, wobei das flugfähige Transportmittel 41 zumindest eine Aufnahmeeinrichtung 45 aufweist;
c. Austausch von Daten zwischen dem flugfähigen Transportmittel 25 und dem Transportbehälter 25.

Der Transportbehälter 25 wird anschliessend mithilfe des flugfähigen Transportmittels 41 zu einer Pufferstation 60 transportiert und dort zwischengelagert. Bei der Lagerung oder Zwischenlagerung an der Pufferstation 60 wird die Verbindung zwischen dem Transportbehälter 25 und dem flugfähigen Transportmittel 41 logisch und physisch getrennt. Das flugfähige Transportmittel 41 fliegt dann zu einem weiteren Transportbehälter 25 zur Beladestation 30 oder der Pufferstation 60.

Danach oder gleichzeitig wird ein weiterer Transportbehälter 25 mithilfe eines flugfähigen Transportmittels 42 von der Beladestation 30 hin zu einer Endstation 70 transportiert.

Danach oder gleichzeitig wird ein Transportbehälter 25 mithilfe eines flugfähigen Transportmittels 41, 42 von der Pufferstation 60 hin zu der Endstation 70 transportiert.

Danach oder gleichzeitig wird ein Transportbehälter 25 mithilfe eines flugfähigen Transportmittels 41, 42 in der Pufferstation 60 von einer ersten Position in eine weitere Position überführt.

### Bezugszeichenliste

- 20: System
- 22: Überbauung
- 24: Gut
- 25: Transportbehälter
- 26: Koppeleinheit
- 26a: Hängeaufnahme
- 27: Markierungseinheit
- 28: Steuermechanismus
- 29: Öffnungsmechanismus
- 30: Beladestation
- 32: Transportbehälteraufnahmeeinrichtung
- 33: Stranggut
- 34: Fördereinrichtung
- 35: Fördereinheit
- 41: flugfähiges Transportmittel
- 42: flugfähiges Transportmittel
- 43: Antriebseinrichtung
- 44: Kommunikationseinheit
- 45: Aufnahmeeinrichtung
- 46: Erkennungseinheit
- 47: Kamera
- 48: Schnittstelle
- 49: Energieversorgung
- 50: Flugmanagementeinrichtung
- 51: Steuerungseinrichtungen
- 53: Systemsteuereinrichtung
- 54: Recheneinheit
- 55: Speichereinheit
- 56: Kommunikationsschnittstelle
- 60: Pufferstation
- 61: Rahmen von 60
- 63: Stranggüter
- 64: Stranggüter
- 65: Verteilungseinrichtung
- 66: Robotereinheit
- 70: Endstation
- 71: Ablageeinheit

## Patentansprüche

1. System (20) zur intralogistischen Verteilung von Gütern (24), insbesondere in einer abgeschlossenen Räumlichkeit, umfassend zumindest eine Beladestation (30), zumindest einen Transportbehälter (25) zum Aufnehmen zumindest eines Guts (24), wobei der zumindest eine Transportbehälter (25) in der zumindest einen Beladestation (30) mit zumindest einem Gut (24) befüllbar ist, zumindest eine Transportbehälteraufnahmeeinrichtung (32), wobei die zumindest eine Transportbehälteraufnahmeeinrichtung (32) ausgebildet ist, den zumindest einen Transportbehälter (25) hängend aufzunehmen, zumindest ein flugfähiges Transportmittel (41, 42), mit zumindest einer Aufnahmeeinrichtung (45), und zumindest eine Steuerungseinrichtung (51), welche ausgebildet ist, das Flugverhalten des zumindest einen flugfähigen Transportmittels (41, 42) zu steuern, **dadurch gekennzeichnet, dass** die zumindest eine Aufnahmeeinrichtung (45) des zumindest einen flugfähigen Transportmittels (41, 42) ausgebildet ist, den zumindest einen hängenden Transportbehälter (25) von der zumindest einen Transportbehälteraufnahmeeinrichtung (32) aufzunehmen.

2. System nach Anspruch 1, **dadurch gekennzeichnet, dass** die zumindest eine Transportbehälteraufnahmeeinrichtung (32) zumindest ein Stranggut (33) aufweist, an dem der zumindest eine Transportbehälter (25) hängend positionierbar ist.

3. System nach Anspruch 2, **dadurch gekennzeichnet, dass** die zumindest eine Transportbehälteraufnahmeeinrichtung (32) zumindest eine Fördereinrichtung (34) mit zumindest einer Fördereinheit (35) aufweist, welche ausgebildet ist, den zumindest einen Transportbehälter (25) von einer ersten Position zu zumindest einer weiteren Position entlang des zumindest einen Strangguts (33) zu bewegen.

4. System nach einem der vorgenannten Ansprüche, **dadurch gekennzeichnet, dass** das zumindest eine flugfähige Transportmittel (41, 42) eine Erkennungseinheit (46) aufweist, um zumindest den zumindest einen Transportbehälter (25) zu erkennen, wobei die Aufnahmeeinrichtung (45) insbesondere eine Schnittstelle (48) aufweist, um Daten zwischen dem zumindest einen Transportbehälter (25) und dem zumindest einen flugfähigen Transportmittel (41, 42) auszutauschen.

5. System nach einem der vorgenannten Ansprüche, **dadurch gekennzeichnet, dass** das zumindest eine flugfähige Transportmittel (41, 42) eine Energieversorgung (49) aufweist, um zumindest den zumindest einen Transportbehälter (25) mit Energie zu versorgen.

6. System nach einem der vorgenannten Ansprüche, **dadurch gekennzeichnet, dass** das zumindest eine Pufferstation (60) vorhanden ist, wobei die zumindest eine Pufferstation (60) zumindest ein Stranggut (63, 64) aufweist, an dem der zumindest eine Transportbehälter (25) hängend positionierbar ist, insbesondere freihängend angeordnet ist.

7. System nach Anspruch 6, **dadurch gekennzeichnet, dass** zumindest eine Pufferstation (60) eine Verteilungseinrichtung (65) aufweist.

8. System nach einem der vorgenannten Ansprüche, **dadurch gekennzeichnet, dass** die zumindest eine Steuereinrichtung (51) im zumindest einen flugfähigen Transportmittel (41, 42) angeordnet ist.

9. System nach einem der vorgenannten Ansprüche, **dadurch gekennzeichnet, dass** mehrere flugfähige Transportmittel (41, 42) vorhanden sind, wobei die zumindest eine Steuereinrichtung (51) ausgebildet ist, das Flugverhalten der mehreren flugfähige Transportmittel zu steuern .

10. System nach einem der vorgenannten Ansprüche, **dadurch gekennzeichnet, dass** der zumindest eine Transportbehälter (25) eine Koppeleinheit (26) aufweist, welche mit der Aufnahmeeinrichtung (45) des zumindest einen flugfähigen Transportmittels (41, 42) wechselwirkt.

11. System nach einem der vorgenannten Ansprüche, **dadurch gekennzeichnet, dass** eine Flugmanagementeinrichtung (50) vorhanden ist, welches mit der zumindest einen Steuereinrichtung (51) zum Austausch von Daten verbunden ist.

12. Verfahren zum Transportieren von Güter (24) in einem System (20) zur intralogistischen Verteilung von Gütern, insbesondere ein System nach einem der Ansprüche 1 bis 11, umfassend:
a. Bereitstellen von zumindest einem Transportbehälter (25) auf zumindest einer Transportbehälteraufnahmeeinrichtung (32), wobei der zumindest eine Transportbehälter (25) hängend auf der zumindest einen Transportbehälteraufnahmeeinrichtung (32) angeordnet wird;
b. Aufnahme des zumindest einen Transportbehälters (25) mit zumindest einem flugfähigen Transportmittel (41, 42), wobei das zumindest eine flugfähige Transportmittel (41, 42) zumindest eine Aufnahmeeinrichtung (45) aufweist;
c. Austausch von Daten zwischen dem zumindest einen flugfähigen Transportmittel (41, 42) und dem zumindest einen Transportbehälter (25).

13. Verfahren nach Anspruch 12, **dadurch gekennzeichnet, dass** der zumindest eine Transportbehälter (25) mithilfe des flugfähigen Transportmittels (41, 42) zu einer Pufferstation (60) transportiert wird und dort zwischengelagert wird.

14. Verfahren nach Anspruch 13, **dadurch gekennzeichnet, dass** der zumindest eine Transportbehälter (25) mithilfe des flugfähigen Transportmittels (41, 42) von einer Pufferstation (60) hin zu einer Endstation (70) transportiert wird.

15. Verfahren nach Anspruch 14, **dadurch gekennzeichnet, dass** der zumindest eine Transportbehälter (25) mithilfe des flugfähigen Transportmittels (41, 42) von einer Beladestation (30) hin zu einer Endstation (70) transportiert wird.
